# EUROPEAN PATENT SPECIFICATION

(11) **EP 3 783 943 B1**
(45) Date of publication and mention of the grant of the patent: **15.02.2023**
(21) Application number: 19788823.3
(22) Date of filing: 13.03.2019
(51) Int. Cl.: H04W 36/00, H04W 36/06, H04W 36/30

(54) **COVERAGE LEVEL UPDATING METHOD, BASE STATION, TERMINAL, AND READABLE STORAGE MEDIUM**
REICHWEITENAKTUALISIERUNGSVERFAHREN, BASISSTATION, ENDGERÄT UND LESBARES SPEICHERMEDIUM
PROCÉDÉ DE MISE À JOUR DE NIVEAU DE COUVERTURE, STATION DE BASE, TERMINAL ET SUPPORT D'ENREGISTREMENT LISIBLE

(30) Priority: 16.04.2018 CN 201810340576
(43) Date of publication of application: 24.02.2021
(73) Proprietor: ZTE Corporation, Shenzhen, Guangdong 518057 (CN)
(72) Inventor: LI, Jinglan, Nanshan District, Shenzhen, Guangdong 518057 (CN)
(74) Representative: Studio Torta S.p.A.
(86) International application number: PCT/CN2019/078040
(87) International publication number: WO 2019/201036

(56) References cited:
- EP-A2- 0 757 280
- WO-A1-2015/116870
- CN-A- 101 873 540
- CN-A- 102 014 409
- US-A1- 2017 230 780

## Description

### TECHNICAL FIELD

The present disclosure relates to, but is not limited to, the field of wireless communication technology, in particular to a coverage level updating method, a base station, a terminal, and a readable storage medium.

### BACKGROUND

The Internet of Things is an important part of a new generation of information technology, and is an important development stage of the "information" era. As the name "Internet of Things" implies, the Internet of Things is an internet where things are connected to things. That is, not only the intelligent mobile terminals (such as a smart phone, a PC machine, etc.) in daily life may carry out data communication with each other through a mobile communication network, but also the automatic machine equipment (such as an intelligent electric meter/water meter, an intelligent household appliance, an intelligent logistics equipment, an intelligent medical equipment, an intelligent transportation equipment, an intelligent building equipment, an intelligent industrial equipment, etc.) may also carry out data communication through the mobile communication network.

Due to great differences in cell positions where various "things" in the Internet of Things locate as well as great differences in strengths of various cell signals received by the "things" (that is, there are great differences in coverage levels), different physical layer technologies are adopted for terminals at different coverage levels in the Internet of Things, so as to meet communication requirements on various "things". In order to maintain interactive communication between terminals and base stations, the coverage levels have to be kept in consistent. As the coverage level of the terminal may change when a position of the terminal changes or when the wireless environment changes, a communication interruption between the terminal and the base station may be incurred, if the base station fails to sense a change in coverage level of the terminal and update the coverage level in time, thus affecting the users' usage.

WO2015116870A1 discloses a method and apparatus for reconfiguration of coverage enhancement (CE) mode and/or level in connected mode. A method in a wireless transmit/receive unit (WTRU) includes transmitting an indication to an evolved Node B (eNB), wherein the indication includes a request for reconfiguration of a CE mode and level, receiving a configuration of a new CE mode and/or level from the eNB, and reconfiguring the CE mode and/or level based on the received configuration.

US2017230780A1 discloses adaptive radio link monitoring for machine type communication(s) (MTC), enhanced MTC (eMTC), and/or narrowband Internet-ofThings (NB-IoT). In one aspect, a method is provided which may be performed by a user equipment (UE). The method generally includes receiving a first configuration of parameters for receiving downlink control channel signaling, the first configuration of parameters associated with a first coverage level; measuring at least one parameter related to channel conditions; determining one or more dynamic radio link monitoring (RLM) threshold values for the at least one parameter based, at least in part, on the first configuration of parameters; and performing RLM functions based on the one or more dynamic RLM threshold values. The threshold may comprise early out thresholds that occur before out-of-sync (OOS) or in-sync thresholds. The thresholds may be determined using lookup tables.

### SUMMARY

The reader is referred to the appended independent claims. Some preferred features are laid out in the dependent claims. So, the problem of communication interruption caused by inconsistent coverage levels between the terminal and the base station can be solved.

With the coverage level updating method, device, base station, terminal and readable storage medium provided by the present disclosure, the base station can sense change of the coverage level of the terminal and carry out update processing for the coverage level in time, so as to ensure an uninterrupted communication of the terminal, thereby improving user experience.

### BRIEF DESCRIPTION OF THE DRAWINGS

FIG. 1 is a flow chart illustrating a coverage level update processing method provided by the present disclosure;
FIG. 2 is a flow chart illustrating a second coverage level update processing method provided by the present disclosure;
FIG. 3 is a flow chart illustrating a third coverage level update processing method provided by the present disclosure;
FIG. 4 is a flow chart illustrating a fourth coverage level update processing method provided by the present disclosure;
FIG. 5 is a flow chart illustrating a fifth coverage level update processing method provided by the present disclosure;
FIG. 6 is a structural block diagram illustrating a coverage level update processing device provided by the present disclosure;
FIG. 7 is a structural block diagram illustrating a second coverage level update processing device provided by the present disclosure;
FIG. 8 is a structural block diagram illustrating a base station provided by the present disclosure;
FIG. 9 is a structural block diagram illustrating a terminal provided by the present disclosure;
FIG. 10 is a schematic diagram illustrating a hardware structure of a terminal provided by the present disclosure;
FIG. 11 is a structural block diagram illustrating a third coverage level update processing device provided by the present disclosure;
FIG. 12 is a structural block diagram illustrating a fourth coverage level update processing device provided by the present disclosure.

### DETAILED DESCRIPTION

It should be understood that specific embodiments described herein are merely used to explain the present disclosure, but not intended to limit the present disclosure.

In the following description, using terms such as "module", "component" or "unit" to describe elements is only to facilitate description of the present disclosure, and the terms does not have special meaning in themselves. Therefore, the "module", "component" or "unit" may be mixed.

Terminals may be implemented in various forms. For example, terminals described in embodiments of the present disclosure may include terminals such as a set-top box, a mobile terminal, a smart phone, a laptop, a digital broadcast receiver, a personal digital assistant (PDA), a tablet (PAD), a portable multimedia player (PMP), a navigation device, etc.; and fixed terminals such as a digital TV, a desktop computer, etc. The following description is made by taking a mobile terminal as an example of the terminal. However, those skilled in the art may appreciate that the configuration described in the embodiments of the present disclosure may also be applied to various types of fixed terminals, except elements that are specifically configured for mobile purposes.

In related art, in the Internet of things, different physical layer technologies are adopted for terminals at different coverage levels, such as mobile communication modes are divided into 2G (generation)\3G\4G\5Getc. The communication modes supported by terminals are different and the coverage areas of the mobile communication networks with different modes are unevenly continuous, thus, when a position of the terminal changes or when a wireless environment changes, the mobile communication network between the base station and the terminal will be interrupted if the base station cannot sense a change in coverage level of the terminal and accordingly update the coverage level in time, which will greatly affect the usage of the terminal and make the user experience worse.

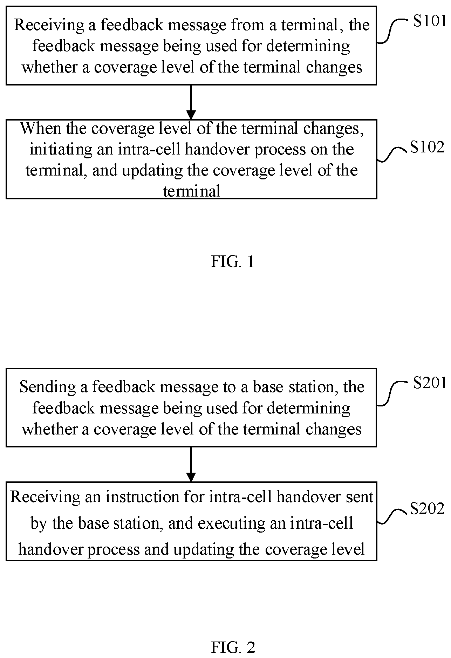

As shown in FIG. 1, the present disclosure provides a coverage level update processing method applied to a base station. The method includes the following steps:
In S101, a feedback message is received from a terminal, and the feedback message is used for determining whether a coverage level of the terminal changes.

A connection is established between the base station and the terminal. After receiving the feedback message from the terminal, the base station determines whether the coverage level of the terminal changes.

In practical application, after the connection is established between the base station and the terminal, the base station determines whether the terminal supports a function for detecting and notifying changes in coverage level. If the terminal supports the function for detecting and notifying changes in coverage level, the terminal is notified to enable the function through a radio resource control (RRC) signaling.

If the terminal does not support the function for detecting and notifying changes in coverage level, a configuration for periodically measuring reference signal receiving powers (RSRP) of a current cell is sent to the terminal. The terminal periodically measures the RSRP of the current cell according to the configuration provided by the base station and reports the measurement result to the base station. The base station determines whether a coverage level of the terminal changes, according to the result of the periodic measurement made to the current cell by the terminal.

If the terminal supports the function for detecting and notifying changes in coverage level, the base station acquires the changed coverage level of the terminal from the RRC signaling message sent by the terminal. The base station notifies the terminal to initiate a detection for coverage level changes through the RRC signaling: when the terminal moves or the wireless environment changes, the measurement of the RSRP of the current cell is triggered by periodically monitoring a channel quality of the cell or setting a threshold for packet loss rate, and then the measured PSPR is compared with RSRP thresholds for different coverage levels broadcast by the base station, so as to determine whether the coverage level of a position where the terminal locates changes. The terminal reports the detection result to the base station through the RRC signaling message. The base station receives the RRC signaling message sent by the terminal and extract the determination result for the coverage level of the terminal from the RRC signaling message.

If the terminal does not support the function for detecting and notifying changes in coverage level, the terminal periodically measures the RSRP of the current cell and reports the measurement result to the base station. The base station determines the current coverage level of the terminal, according to measurement result for the RSRP of the current cell reported by the terminal and the RSRP thresholds corresponding to different coverage levels and configured by the base station, and determines whether the coverage level of the terminal changes. When the terminal moves or the wireless environment changes, it is determined if the coverage level of the terminal changes according to the measurement result for RSRP of the current cell reported by the terminal.

In S102, when the coverage level of the terminal changes, an intra-cell handover process is initiated on the terminal and the coverage level of the terminal is updated.

In practical application, the base station acquires that the coverage level of the terminal changes, initiates the intra-cell handover process on the terminal (i.e., a target cell for handover is still a current serving cell), and reallocates physical resources (which includes a narrowband position and repetition times of respective channels) to the terminal according to the changed coverage level. An instruction for intra-cell handover is sent to the terminal to trigger the terminal to execute a handover process according to reconfigured physical resources in the instruction for intra-cell handover, so as to randomly re-access the current cell. Thus, the terminal uses new configuration to randomly re-access the cell, so that the coverage levels and the physical resources used by the base station and the terminal are in consistent, ensuring that the user service will not be interrupted.

In some embodiments, as shown in FIG. 2, the present disclosure provides a coverage level update processing method applied to a terminal. The method includes the following steps:
In S201, a feedback message is sent to a base station, and the feedback message is used for determining whether a change occurs in a coverage level of the terminal;
After a connection between the terminal and the base station is established, information on whether a coverage level of the terminal changes is reported to the base station through the feedback message. In practical application, if the terminal supports a function for detecting and notifying changes in coverage level, the information on whether a coverage level of the terminal changes is reported to the base station through a RRC signaling. If the terminal does not support the function for detecting and notifying changes in coverage level, a RSRP of a current cell is periodically measured according to a configuration of the base station, and the measurement result is reported to the base station through a measurement report message.

In some aspects if the terminal supports the function for detecting and notifying changes in coverage level, the function for detecting and notifying changes in coverage level is enabled. When the terminal moves or the wireless environment changes, the measurement of the RSRP of the current cell is triggered by periodically monitoring a channel quality of the cell or setting a threshold for packet loss rate, and then the measured PSPR is compared with RSRP thresholds for different coverage levels broadcast by the base station, so as to determine whether the coverage level of a position where the terminal locates changes. When the terminal finds that the coverage level of its position changes, the terminal sends a notification to the base station through a RRC signaling message to notify the determination result on the terminal. The RRC signaling message may be a newly added new radio RRC signaling message, or an indication unit for indicating the current coverage level of the terminal may be added to an existing RRC signaling message (such as a UL Information Transfer message, etc.).

If the terminal does not support the function for detecting and notifying changes in coverage level, a configuration for periodically measuring RSRP of the current cell is received from the base station. The RSRP of the current cell is periodically measured according to the configuration provided by the base station, and the measurement result is reported to the base station through the measurement report message. The base station is triggered to determine the current coverage level of the terminal, according to measurement result for RSRP of the current cell reported by the terminal and the RSRP thresholds corresponding to different coverage levels and configured by the base station, thus determining whether the coverage level of the terminal changes. When the terminal moves or the wireless environment changes, it is determined if the coverage level of the terminal changes according to the measurement result for RSRP of the current cell reported by the terminal.

In S202, an instruction for intra-cell handover is received from the base station, and an intra-cell handover process is executed and the coverage level is updated.

After receiving the instruction for intra-cell handover from the base station, the terminal performs the handover process according to a reconfigured physical resource in the instruction for intra-cell handover (which includes a narrowband position and repetition times of respective channels), and randomly re-accesses the current cell. Thus, the terminal uses new configuration to randomly re-access the cell, so that the coverage levels and the physical resources used by the base station and the terminal are in consistent, ensuring that the user service will not be interrupted. Therefore, the coverage level update processing method is achieved, which is simple and easy to operate and is also suitable for other systems having similar problems.

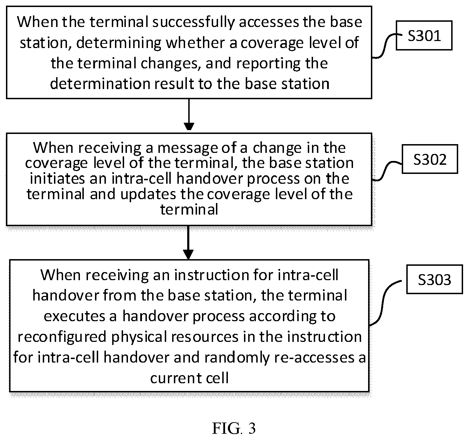

As shown in FIG. 3, the present disclosure provides a coverage level update processing method for performing interaction between a base station and a terminal. The method includes the following steps:
In S301, when the terminal successfully accesses the base station, it is determined whether a coverage level of the terminal is changed, and the determination result is reported to the base station.

An indicator indicating whether the terminal supports a detection and notification for coverage level change is added in a report message for terminal (UE)capability. When the terminal moves, or when the wireless environment changes (for example, a wireless signal strength changes due to a car passing by the terminal, weather changes, etc.), the coverage level of the terminal may change. The base station may notice that the coverage level of the terminal changes by the following different methods according to information on terminal (UE)capability.

In S302, when receiving a message indicating a change in the coverage level of the terminal, the base station initiates an intra-cell handover process on the terminal and updates the coverage level of the terminal.

When noticing that the coverage level of the terminal changes, the base station initiates an intra-cell handover process (that is, a handover target cell is still the current serving cell), updates the coverage level of the terminal, and reallocates physical resources to the terminal according to the changed coverage level during the intra-cell handover process, so that the terminal may use a new configuration to re-access the cell.

In S303, when receiving an instruction for intra-cell handover from the base station, the terminal executes a handover process according to reconfigured physical resources in the instruction for intra-cell handover and randomly re-access to a current cell.

The intra-cell handover refers to a handover between different frequency points or different time slots within the same cell. Actually, it has the same effect as initiating a cell frequency hopping, but in general, with the same *chgr,* if Trx>=3, it is recommended to initiate the frequency hopping, while if TRX<3, it is not recommended to initiate the frequency hopping, but the intra-cell handover maybe initiated. According to the strength of the signal received by the terminal, a main control module of a main device of the base station adjusts and allocates a spectrum resource or a time slot resource to realize a mobile network communication with higher quality.

Herein, the step of initiating the intra-cell handover process on the terminal and updating the coverage level of the terminal includes:
reallocating physical resources including a narrowband position and repetition times of respective channels to the terminal according to the changed coverage level.

Herein, after the terminal successfully accesses the base station, the method further includes:
the base station determines whether the terminal supports a function for detecting and notifying changes in coverage level.

Herein, the step of determining whether the coverage level of the terminal changes and reporting the determination result to the base station, after the terminal successfully accesses the base station, includes:
If the terminal supports the function for detecting and notifying changes in coverage level, the base station notifies the terminal to enable the function for detecting and notifying changes in coverage level and report the detection result through a RRC signaling. Otherwise, the base station determines whether a coverage level of the terminal changes according to a periodic measurement result for RSRP of the current cell by the terminal.

If the terminal supports the function for detecting and notifying changes in coverage level, the base station may notify the terminal to enable the function for detecting and notifying changes in coverage level through the RRC signaling when the terminal is accessed. When the terminal finds that its coverage level changes, it notifies the base station of the change through the RRC signaling message. The notification message may be a newly added new radio RRC signaling message, or an indication unit for indicating the current coverage level of the terminal may be added to the existing RRC signaling message.

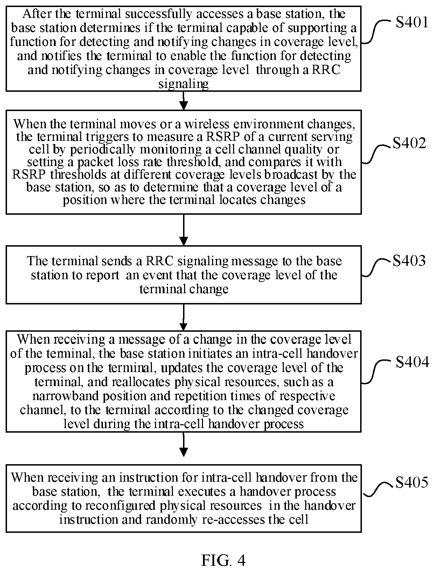

As shown in FIG. 4, the present disclosure provides a coverage level update processing method, which includes the following steps:
In S401, after a terminal successfully accesses a base station, the base station determines that the terminal is capable of supporting a function for detecting and notifying changes in coverage level, and notifies the terminal through a RRC signaling to enable the function for detecting and notifying changes in coverage level.

In S402, when the terminal moves or a wireless environment is changed, the terminal triggers to measure a RSRP of a current serving cell by periodically monitoring a cell channel quality or setting a packet loss rate threshold, and compares the measured RSPR with a RSRP threshold for different coverage levels broadcast by the base station, so as to determine that a coverage level of a position where the terminal locates changes.

In S403, the terminal sends a RRC signaling message to the base station to report an event that the coverage level of the terminal changes. In some embodiments, the notification message may be a newly added new radio RRC signaling message, or an indication unit for indicating the current coverage level of the terminal may be added to the existing RRC signaling message.

In S404, when receiving a message indicating that the coverage level of the terminal changes, the base station initiates an intra-cell handover process on the terminal (that is, a handover target cell is still the current serving cell), updates the coverage level of the terminal, and reallocates physical resources (such as a narrowband position and repetition times of respective channels) to the terminal according to the changed coverage level during the intra-cell handover process.

In S405, when the terminal receives an instruction for intra-cell handover from the base station, a handover process is executed according to the reconfigured physical resources in the instruction for intra-cell handover and the terminal randomly re-accesses the cell.

If a terminal UE is not capable of supporting the function for detecting and notifying changes in coverage level, the base station may send to the terminal a configuration for periodically measuring the RSRP of the current serving cell after the terminal accesses to the base station. The terminal periodically measures the RSRP of the current cell according to the configuration of the base station, and reports the measurement result to the base station. The base station determines the current coverage level of the terminal according to the RSRP measurement value reported by the terminal and RSRP thresholds corresponding to different coverage levels and configured by the present base station, and determines whether the coverage level of the terminal changes.

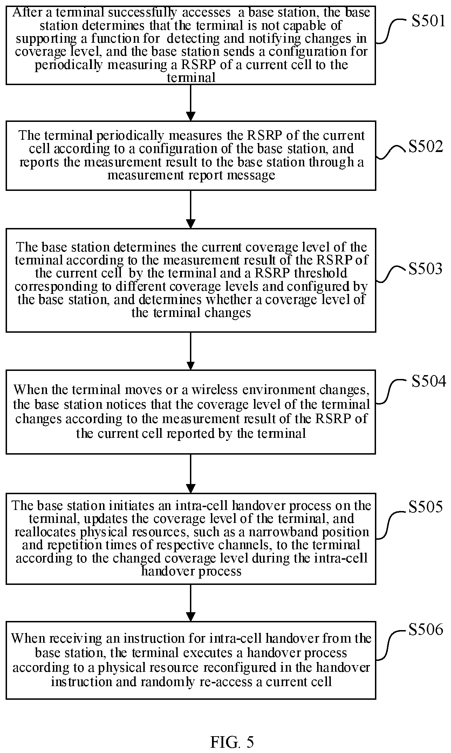

As shown in FIG. 5, the present disclosure provides a coverage level update processing method, which includes the following steps:
In S501, after a terminal successfully accesses to a base station, the base station determines that the terminal is capable of supporting a function for detecting and notifying changes in coverage level, and the base station sends to the terminal a configuration for periodically measuring a RSRP of a current cell.

In S502, the terminal periodically measures the RSRP of the current cell according to a configuration of the base station, and reports the measurement result to the base station through a measurement report message.

In S503, the base station determines the current coverage level of the terminal according to the measurement result of the RSRP of the current cell reported by the terminal and a RSRP threshold corresponding to different coverage levels configured by the base station, and determines whether the coverage level of the terminal changes.

In S504, when the terminal moves or the wireless environment changes, the base station determines that a coverage level of the terminal changes according to the measurement result of the RSRP of the current cell reported by the terminal.

In S505, the base station initiates an intra-cell handover process on the terminal (that is, a handover target cell is still a current serving cell), updates the coverage level of the terminal, and reallocates physical resources (such as a narrowband position and repetition times of respective channels) to the terminal according to the changed coverage level during the intra-cell handover process.

In S506, when the terminal receives an instruction for intra-cell handover from the base station, the terminal executes a handover process according to reconfigured physical resources in the instruction for intra-cell and randomly re-accesses to a current cell.

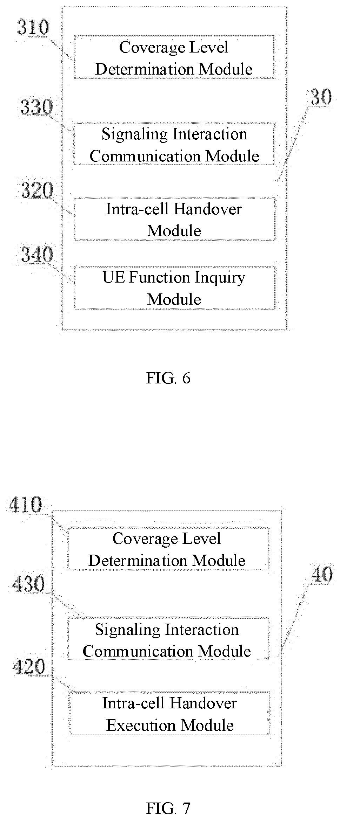

As shown in FIG. 6, the present disclosure provides a coverage level update processing device 30, which is applied to a base station 100. The device 30 includes:
a signaling interaction communication module 330 configured to establish a connection with a terminal, receive a feedback message from the terminal, and realize a signaling interaction between a base station and the terminal;
a coverage level determination module 310 configured to determine whether a coverage level of the terminal changes;
an intra-cell handover module 320 configured to initiate an intra-cell handover process on the terminal when the coverage level of the terminal changes, reallocates physical resources, including a narrowband position and repetition times of respective channels, to the terminal according to the changed coverage level, and update the coverage level of the terminal;
a UE function inquiry module 340 configured to cause the base station 100 to inquire and determine whether the terminal 200 supports a function for detecting and notifying changes in coverage level.

As shown in FIG. 7, the present disclosure provides a coverage level update processing device 40, which is applied to a terminal 200. The device 40 includes:
a signaling interaction communication module 430 configured to establish a connection between a terminal and a base station, send a feedback message to the base station, and realize a signaling interaction between the terminal and the base station;
a coverage level determination module 410 configured to detect whether a coverage level of the terminal changes, report a detection message to the base station, and trigger the base station to determine whether the coverage level of the terminal changes;
an intra-cell handover execution module 420 configured to receive instruction for intra-cell sent by the base station, and execute an intra-cell handover process and update the coverage level; and execute a handover process according to reconfigured physical resource in the instruction for intra-cell, and randomly re-access the current cell.

In some embodiments, an embodiment of the present disclosure provides a base station. The base station includes a memory, a processor, and a computer program stored on the memory and operative by the processor. When the computer program is executed by the processor, the steps of the coverage level update processing method applied to the base station as described above are implemented.

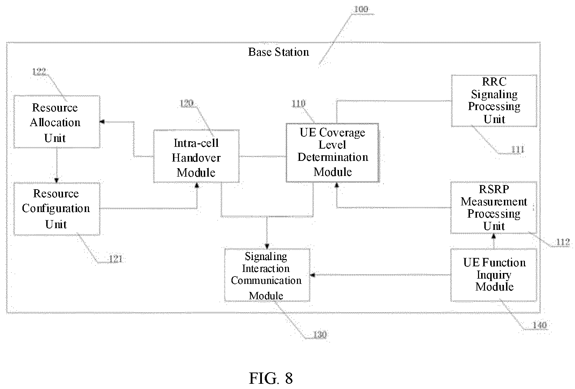

As shown in FIG. 8, a base station 100 is provided with a resource allocation unit 122 and a resource configuration unit 121 connected with an intra-cell handover module 120, the resource allocation unit 122 and the resource configuration unit 121 are configured to reallocate physical resources (such as a narrowband position and repetition times of respective channels) to the terminal according to a changed coverage level, and update a coverage level of the terminal;
a RRC signaling processing unit 111 connected with a UE coverage level determination module 110, the RRC signaling processing unit 111 is configured to send a RRC signaling to a terminal 200, and to receive and process a RRC signaling from the terminal 200; or a RSRP measurement processing unit 112 configured to determine the current coverage level of the terminal according to a measurement result for RSRP of a current cell and reported by the terminal 200 and RSRP thresholds corresponding to different coverage levels and configured by the base station, and determine whether a coverage level of the terminal 200 changes;
a signaling interaction communication module 130 and a UE function inquiry module 140.

The signaling interaction communication module 130 and the UE function inquiry module 140 are configured similarly as the signaling interaction communication module 330 and a UE function inquiry module 340 as shown in FIG. 6, and the detail description thereof is omitted herein.

The present disclosure provides a terminal, including a memory, a processor, and a computer program stored on the memory and operative on the processor.

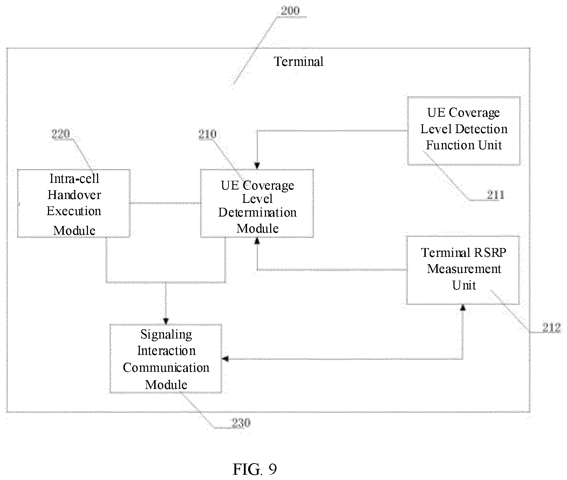

In actual implementation, as shown in FIG. 9, a terminal 200 is provided with: a signaling interaction communication module 230, an intra-cell handover execution module 220, and a terminal UE coverage level detection function unit 211 connected with a UE coverage level determination module 210, the terminal UE coverage level detection function unit 211 is configured to enable a function for detecting and notifying changes in coverage level according to a RRC signaling of a base station 100 and report a detection result to the base station 100.

When the terminal UE is not capable of supporting the function for detecting and notifying changes in coverage level, a terminal RSRP measurement unit 212connected with the UE coverage level determination module 210 is configured to periodically measure a RSRP of a current cell according to a configuration of a base station 100 and report the measurement result to the base station 100 through a measurement report message.

The intra-cell handover execution module 220 and the signaling interaction communication module 230 is configured similarly as the intra-cell handover execution module 420 and the signaling interaction communication module 430 as shown in FIG. 7, and the detail description thereof is omitted herein.

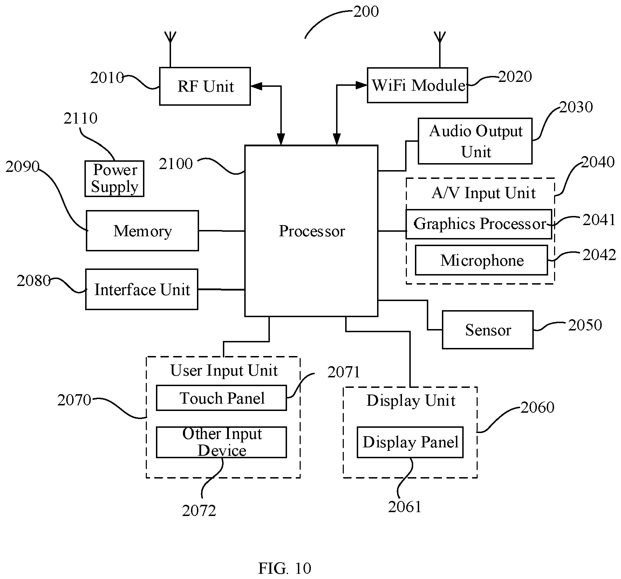

FIG. 10 is a schematic diagram illustrating a hardware structure of a terminal of the present disclosure. In practical application, as shown in FIG. 10, the terminal 200 may include components such as a radio frequency (RF) unit 2010, a WiFi module 2020, an audio output unit 2030, an A/V (audio/video) input unit 2040 (including a graphic processor 2041 and a microphone 2042), a sensor 2050, a display unit 2060 (including a display panel 2061), a user input unit 2070 (including a control panel 2071 and another input device 2072), an interface unit 2080, a memory 2090, a processor 2100, and a power supply 2110. Those skilled in the art may appreciate that the terminal structure shown in FIG. 10 does not constitute a limitation on the terminal, and the terminal may include more or fewer components than being illustrated, or the terminal may be combined with some components, or have different component arrangements.

The memory 2090 may be configured to store a software program and various data. The memory 2090 may mainly include a program storage area and a data storage area. The program storage area may store an operating system, an application program for realizing at least one function (such as a sound playing function, an image playing function, etc.), etc.; and the data storage area may store data (such as audio data, a phone book, etc.) created according to the usage of a mobile phone. In addition, the memory 209 may include a high-speed random access memory, and may further include a non-volatile memory, such as at least one magnetic disk memory device, a flash memory device, or other volatile solid-state memory devices.

The processor 2100 is a control center of the terminal, which connects respective parts of the whole terminal with various interfaces and lines, achieves various functions of the terminal and processes data by running or executing software programs and/or modules stored in the memory 2090, and invoking data stored in the memory 2090, thereby monitoring the terminal as a whole. The processor 2100 may include one or more processing units. When the computer program in the memory 2090 is executed by the processor 2100, the above-described coverage level update processing method applied to the terminal may be implemented, the method includes steps of:
sending a feedback message to a base station, wherein, the feedback message is used to determine whether a coverage level of the terminal changes;
receiving an instruction for intra-cell handover from the base station and executing an intra-cell handover process and updating the coverage level; and executing the handover process according to reconfigured physical resources in the instruction for intra-cell handover, and randomly re-accessing a current cell.

The method further includes: notifying the base station of information on whether the terminal supports a function for detecting and notifying changes in coverage level;
When the terminal supports the function for detecting and notifying changes in coverage level, sending the feedback message to the base station includes: enabling a function for detecting and notifying changes in coverage level, and reporting a detection result to the base station through a RRC signaling.

When the terminal does not support the function for detecting and notifying changes in coverage level, sending the feedback message to the base station includes: periodically measuring a RSRP of a current cell according to a configuration of the base station, and reporting a measurement result to the base station.

In some aspects, determining whether a coverage level of the terminal changes includes:
when the terminal supports the function for detecting and notifying changes in coverage level, acquiring the changed coverage level of the terminal from a RRC signaling message sent by the terminal;
when the terminal does not support the function for detecting and notifying changes in coverage level, determining the current coverage level of the terminal according to the measurement result for RSRP of the current cell reported by the terminal and a RSRP threshold corresponding to different coverage levels and configured by the base station, and determining whether a coverage level of the terminal changes.

The present disclosure provides a coverage level update processing device 80, which is arranged between a base station 100 and a terminal 200. The device 80 includes:
a coverage level determination module configured to determine whether a coverage level of the terminal 200 changes when the terminal 200 successfully accesses the base station 100, and report the determination result to the base station 100;
an intra-cell handover module 820 configured to initiate an intra-cell handover process on the terminal 200 when the base station 100 receives a message indicating a change in the coverage level of the terminal 200, reallocates physical resources, including a narrowband position and repetition times of respective channel, to the terminal according to the changed coverage level, and update the coverage level of the terminal;
an intra-cell handover execution module 830, configured to execute a handover process according to reconfigured physical resources in an instruction for intra-cell handover when the terminal 200 receives the instruction for intra-cell handover from the base station 100, and randomly re-access a current cell.

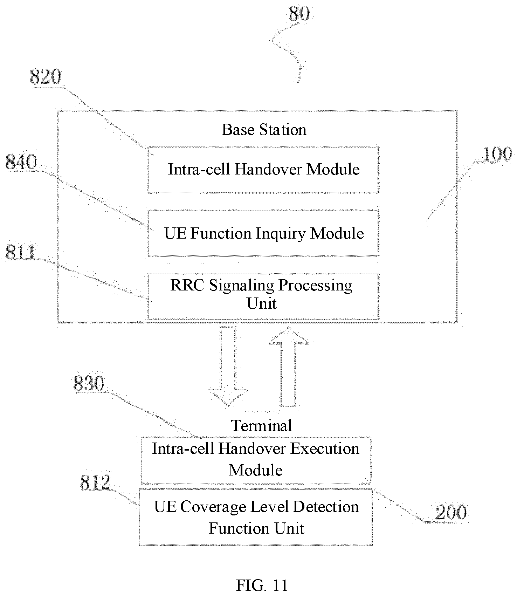

In actual implementation, as shown in FIG. 11, when a terminal UE capable of supporting a function for detecting and notifying changes in coverage level, another coverage level update processing device 80 is provided in an embodiment of the present disclosure, which includes the following modules:
a coverage level determination module, including: a RRC signaling processing unit 811 arranged at a base station 100, configured to send a RRC signaling to a terminal 200 and receive and process a RRC signaling of the terminal 200; and a terminal UE coverage level detection function unit 812 arranged at the terminal 200, configured to enable a function for detecting and notifying changes in coverage level according to a RRC signaling of the base station 100 and report the detection result to the base station 100;
an intra-cell handover module 820 configured to initiate an intra-cell handover process on the terminal 200 when the base station 100 receives a message indicating a change in the coverage level of the terminal 200;
an intra-cell handover execution module 830 configured to execute a handover process according to reconfigured physical resources in an instruction for intra-cell handover when the terminal 200 receives the instruction for intra-cell handover from the base station 100, and randomly re-access a current cell;
a UE function inquiry module 840 configured for cause the base station 100 to inquire and determine whether the terminal 200 supports the function for detecting and notifying changes in coverage level.

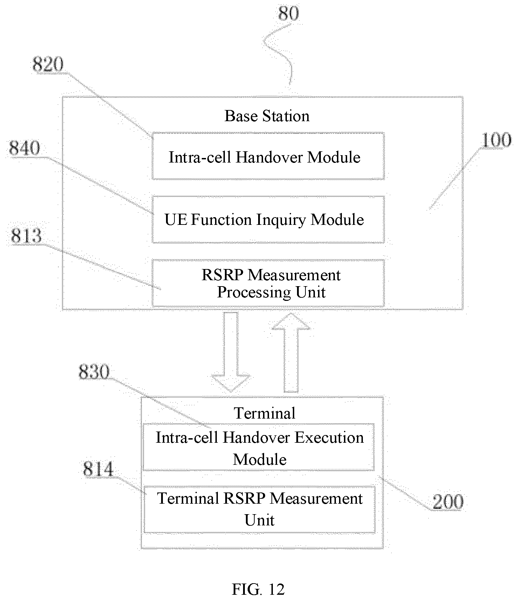

As shown in FIG. 12, when a terminal UE is not capable of supporting the function for detecting and notifying changes in coverage level, another coverage level update processing device 80 is provided in the present disclosure, which includes the following modules:
a coverage level determination module, including: a terminal RSRP measurement unit 814 arranged at a terminal 200, configured to periodically measure a RSRP of a current cell according to a configuration of a base station 100 and reports the measurement result to the base station 100 through a measurement report message; and
a RSRP measurement processing unit 813 arranged at the base station 100, configured to determine the current coverage level of the terminal according to a measurement result of a RSRP of a current cell reported by the terminal 200 and a RSRP threshold corresponding to different coverage levels and configured by the base station, and determine whether a coverage level of the terminal 200 changes.
an intra-cell handover module 820, configured to initiate an intra-cell handover process on the terminal 200 when the base station 100 receives a message indicating a change in the coverage level of the terminal 200.

The present disclosure provides a computer-readable storage medium, storing at least one program executable by at least one processor, to implement the steps of the coverage level update processing method applied to the base station as described above, and/or to implement the steps of the coverage level update processing method applied to the terminal as described above.

According to the terminal coverage level updating method, device, base station, terminal and readable storage medium provided by the present disclosure, when the terminal position changes or the wireless environment changes, the base station may sense the change in the coverage level of the terminal and execute the coverage level update processing timely, so as to ensure an uninterrupted communication of the terminal and improve user experience.

It should be noted that the terms "include", "comprise", and any variants thereof in the present disclosure are intended to cover a non-exclusive inclusion. Therefore, a process, a method, an article, or an apparatus that includes a series of elements not only includes such elements, but also includes other elements that are not clearly listed or that are inherent to the process, the method, the article, or the apparatus. Unless otherwise specified, an element limited by "include a/an..." does not exclude other same elements existing in the process, the method, the article, or the apparatus that includes the element.

The sequence numbers of the foregoing aspects of the present disclosure are merely for description and do not indicate the preference of the aspects.

The specific implementations are merely illustrative and are not limitative.

## Claims

1. A coverage level update processing method applied to a base station, comprising:
receiving (S101) a feedback message from a terminal, wherein, the feedback message relates to a current cell of the terminal, and is used to determine whether a coverage level of the terminal changes;
determining whether a coverage level of the terminal changes according to the feedback message; and
initiating (S102) an intra-cell handover process on the terminal when the coverage level of the terminal changes, and updating the coverage level of the terminal;
wherein, initiating an intra-cell handover process on the terminal when the coverage level of the terminal changes and updating the coverage level of the terminal, comprises reconfiguring physical resources to the terminal according to the changed coverage level, sending an instruction for intra-cell handover to the terminal to trigger the terminal to execute the intra-cell handover process according to the reconfigured physical resources in the instruction to randomly re-access the current cell.

2. The coverage level update processing method according to claim 1, further comprising:
sending (S501) to the terminal an instruction indicating a configuration for periodically measuring a reference signal receiving power RSRP of the current cell.

3. The coverage level updating processing method according to claim 2, wherein receiving the feedback message from the terminal (S101) comprises:
receiving a measurement result for RSRP of the current cell from the terminal, determining a current coverage level of the terminal according to RSRP thresholds corresponding to different coverage levels and configured by the base station, and determining whether the coverage level of the terminal changes.

4. A coverage level update processing method applied to a terminal, comprising:
sending (S201) a feedback message to a base station, wherein, the feedback message relates to a current cell of the terminal, and is used to determine whether a coverage level of the terminal changes; and
receiving (S202) an instruction for intra-cell handover sent from the base station if the base station determines that the coverage level of the terminal changes according to the feedback message, wherein, the instruction comprises physical resources reconfigured by the base station according to the changed coverage level, executing an intra-cell handover process and updating the coverage level,
wherein executing the intra-cell handover process and updating the coverage level comprises executing the handover process according to the reconfigured physical resources in the instruction, and then randomly re-accessing the current cell.

5. The coverage level update processing method according to claim 4, wherein sending the feedback message to the base station comprises:
periodically measuring a reference signal receiving power RSRP of the current cell according to a configuration of the base station, and reporting the measurement result to the base station.

6. A base station, comprising a memory, a processor, and a computer program stored on the memory and operative on the processor, wherein when being executed by the processor, the computer program implements steps of the coverage level update processing method according to any one of claims 1 to 3.

7. A terminal, comprising a memory, a processor, and a computer program stored on the memory and operative on the processor, wherein when being executed by the processor, the computer program implements steps of the coverage level update processing method according to claim 4 or 5.

8. A readable storage medium for storing at least one program, the at least one program is executable by at least one processor to implement steps of the coverage level update processing method according to any one of claims 1 to 3.

9. A readable storage medium for storing at least one program, the at least one program is executable by at least one processor to implement steps of the coverage level update processing method according to claim 4 or 5.

## Patentansprüche

1. Verfahren zur Verarbeitung der Aktualisierung des Abdeckungsgrades, das auf eine Basisstation angewendet wird, umfassend:
Empfangen (S101) einer Rückmeldungsnachricht von einem Endgerät, wobei sich die Rückmeldungsnachricht auf eine aktuelle Zelle des Endgeräts bezieht und verwendet wird, um zu bestimmen, ob sich ein Abdeckungsgrad des Endgeräts ändert;
Bestimmen, ob sich ein Abdeckungsgrad des Endgeräts gemäß der Rückmeldungsnachricht ändert; und
Einleiten (S102) eines zell internen Übergabeprozesses auf dem Endgerät, wenn sich der Abdeckungsgrad des Endgeräts ändert, und Aktualisieren des Abdeckungsgrades des Endgeräts;
wobei das Einleiten eines zellinternen Übergabeprozesses auf dem Endgerät, wenn sich der Abdeckungsgrad des Endgeräts ändert, und das Aktualisieren des Abdeckungsgrads des Endgeräts das Rekonfigurieren der physikalischen Ressourcen für das Endgerät gemäß dem geänderten Abdeckungsgrad, das Senden einer Anweisung für die zellinterne Übergabe an das Endgerät, um das Endgerät zu veranlassen, den zellinternen Übergabeprozess gemäß den rekonfigurierten physikalischen Ressourcen in der Anweisung auszuführen, um zufällig erneut auf die aktuelle Zelle zuzugreifen, umfasst.

2. Verfahren zur Verarbeitung der Aktualisierung des Abdeckungsgrades nach Anspruch 1, weiter umfassend:
Senden (S501) einer Anweisung an das Endgerät, die eine Konfiguration für periodisches Messen einer Referenzsignal-Empfangsleistung RSRP der aktuellen Zelle anzeigt.

3. Verfahren zur Verarbeitung der Aktualisierung des Abdeckungsgrades nach Anspruch 2, wobei das Empfangen der Rückmeldungsnachricht von dem Endgerät (S101) Folgendes umfasst:
Empfangen eines Messungsergebnisses für RSRP der aktuellen Zelle von dem Endgerät, Bestimmen eines aktuellen Abdeckungsgrades des Endgeräts gemäß RSRP-Schwellenwerten, die unterschiedlichen Abdeckungsgraden entsprechen und durch die Basisstation konfiguriert sind, und Bestimmen, ob sich der Abdeckungsgrad des Endgeräts ändert.

4. Verfahren zur Verarbeitung der Aktualisierung des Abdeckungsgrades, das auf ein Endgerät angewendet wird, umfassend:
Senden (S201) einer Rückmeldungsnachricht an eine Basisstation, wobei sich die Rückmeldungsnachricht auf eine aktuelle Zelle des Endgeräts bezieht und verwendet wird, um zu bestimmen, ob sich ein Abdeckungsgrad des Endgeräts ändert; und
Empfangen (S202) einer Anweisung zur zell internen Übergabe, die von der Basisstation gesendet wird, wenn die Basisstation bestimmt, dass sich der Abdeckungsgrad des Endgeräts gemäß der Rückmeldungsnachricht ändert, wobei die Anweisung physikalische Ressourcen umfasst, die durch die Basisstation gemäß dem geänderten Abdeckungsgrad rekonfiguriert sind, Ausführen eines zell internen Übergabeprozesses und Aktualisieren des Abdeckungsgrades,
wobei das Ausführen des zell internen Übergabeprozesses und das Aktualisieren des Abdeckungsgrades das Ausführen des Übergabeprozesses gemäß den rekonfigurierten physikalischen Ressourcen in der Anweisung und dann das zufällige Wiederzugreifen auf die aktuelle Zelle umfasst.

5. Verfahren zur Verarbeitung der Aktualisierung des Abdeckungsgrades nach Anspruch 4, wobei das Senden der Rückmeldungsnachricht an die Basisstation Folgendes umfasst:
periodisches Messen einer Referenzsignal-Empfangsleistung RSRP der aktuellen Zelle gemäß einer Konfiguration der Basisstation und Melden des Messungsergebnisses an die Basisstation.

6. Basisstation, umfassend einen Speicher, einen Prozessor und ein Computerprogramm, das auf dem Speicher gespeichert ist und auf dem Prozessor arbeitet, wobei das Computerprogramm, wenn es durch den Prozessor ausgeführt wird, Schritte des Verfahrens zur Verarbeitung der Aktualisierung des Abdeckungsgrades nach einem der Ansprüche 1 bis 3 implementiert.

7. Endgerät, umfassend einen Speicher, einen Prozessor und ein Computerprogramm, das auf dem Speicher gespeichert ist und auf dem Prozessor arbeitet, wobei das Computerprogramm, wenn es durch den Prozessor ausgeführt wird, Schritte des Verfahrens zur Verarbeitung der Aktualisierung des Abdeckungsgrades nach Anspruch 4 oder 5 implementiert.

8. Lesbares Speichermedium zum Speichern mindestens eines Programms, wobei das mindestens eine Programm durch mindestens einen Prozessor ausführbar ist, um Schritte des Verfahrens zur Verarbeitung der Aktualisierung des Abdeckungsgrades nach einem der Ansprüche 1 bis 3 zu implementieren.

9. Lesbares Speichermedium zum Speichern mindestens eines Programms, wobei das mindestens eine Programm durch mindestens einen Prozessor ausführbar ist, um Schritte des Verfahrens zur Verarbeitung der Aktualisierung des Abdeckungsgrades nach Anspruch 4 oder 5 zu implementieren.

## Revendications

1. Procédé de traitement de mise à jour de niveau de couverture appliqué à une station de base, comprenant :
la réception (S101) d'un message de rétroaction depuis un terminal, dans lequel le message de rétroaction concerne une cellule courante du terminal, et est utilisé pour déterminer si un niveau de couverture du terminal change ou non ;
la détermination de si un niveau de couverture du terminal change ou non en fonction du message de rétroaction ; et
l'initiation (102) d'un processus de transfert intracellulaire sur le terminal lorsque le niveau de couverture du terminal change, et la mise à jour du niveau de couverture du terminal ;
dans lequel l'initiation d'un processus de transfert intracellulaire sur le terminal lorsque le niveau de couverture du terminal change et la mise à jour du niveau de couverture du terminal comprennent la reconfiguration de ressources physiques au terminal en fonction du niveau de couverture changé, l'envoi d'une instruction de transfert intracellulaire au terminal pour amener le terminal à exécuter le processus de transfert intracellulaire en fonction des ressources physiques reconfigurées dans l'instruction pour ré-accéder aléatoirement à la cellule courante.

2. Procédé de traitement de mise à jour de niveau de couverture selon la revendication 1, comprenant en outre :
l'envoi (S501) au terminal d'une instruction indiquant une configuration de mesure périodique d'une puissance de réception de signal de référence, RSRP, de la cellule courante.

3. Procédé de traitement de mise à jour de niveau de couverture selon la revendication 2, dans lequel la réception du message de rétroaction depuis le terminal (S101) comprend :
la réception d'un résultat de mesure de RSRP de la cellule courante depuis le terminal, la détermination d'un niveau de couverture courant du terminal en fonction de seuils de RSRP correspondant à différents niveaux de couverture et configurés par la station de base, et la détermination de si le niveau de couverture du terminal change ou non.

4. Procédé de traitement de mise à jour de niveau de couverture appliqué à un terminal, comprenant :
l'envoi (S201) d'un message de rétroaction à une station de base, dans lequel le message de rétroaction concerne une cellule courante du terminal, et est utilisé pour déterminer si un niveau de couverture du terminal change ou non ; et
la réception (S202) d'une instruction de transfert intracellulaire envoyée depuis la station de base si la station de base détermine que le niveau de couverture du terminal change en fonction du message de rétroaction, dans lequel l'instruction comprend des ressources physiques reconfigurées par la station de base en fonction du niveau de couverture changé, l'exécution d'un processus de transfert intracellulaire et la mise à jour du niveau de couverture,
dans lequel l'exécution du processus de transfert intracellulaire et la mise à jour du niveau de couverture comprennent l'exécution du processus de transfert en fonction des ressources physiques reconfigurées dans l'instruction puis le ré-accès aléatoire à la cellule courante.

5. Procédé de traitement de mise à jour de niveau de couverture selon la revendication 4, dans lequel l'envoi du message de rétroaction à la station de base comprend :
la mesure périodique d'une puissance de réception du signal de référence, RSRP, de la cellule courante en fonction d'une configuration de la station de base, et le rapport du résultat de mesure à la station de base.

6. Station de base, comprenant une mémoire, un processeur et un programme informatique stocké dans la mémoire et opérationnel sur le processeur, dans laquelle, lorsqu'il est exécuté par le processeur, le programme informatique met en oeuvre des étapes du procédé de traitement de mise à jour de niveau de couverture selon l'une quelconque des revendications 1 à 3.

7. Terminal, comprenant une mémoire, un processeur et un programme informatique stocké dans la mémoire et opérationnel sur le processeur, dans lequel, lorsqu'il est exécuté par le processeur, le programme informatique met en oeuvre des étapes du procédé de traitement de mise à jour de niveau de couverture selon la revendication 4 ou 5.

8. Support de stockage lisible pour stocker au moins un programme, le au moins un programme étant exécutable par au moins un processeur pour mettre en oeuvre des étapes du procédé de traitement de mise à jour de niveau de couverture selon l'une quelconque des revendications 1 à 3.

9. Support de stockage lisible pour stocker au moins un programme, le au moins un programme étant exécutable par au moins un processeur pour mettre en oeuvre des étapes du procédé de traitement de mise à jour de niveau de couverture selon la revendication 4 ou 5.
